# EUROPÄISCHE PATENTSCHRIFT

(11) **EP 2 404 990 B1**
(45) Veröffentlichungstag und Bekanntmachung des Hinweises auf die Patenterteilung: **27.11.2013**
(21) Anmeldenummer: 11166640.0
(22) Anmeldetag: 19.05.2011
(51) Int. Cl.: C12C 7/16, C12C 7/17, C12C 13/00

(54) **Läuterbottich und Verfahren zur Medienführung durch einen Läuterbottich**
Refining barrel and method for guiding media through a refining barrel
Cuve de clarification et procédé de guidage de fluide à travers une cuve de clarification

(30) Priorität: 05.07.2010 DE 102010030954
(43) Veröffentlichungstag der Anmeldung: 11.01.2012
(73) Patentinhaber: Krones AG, 93073 Neutraubling (DE)
(72) Erfinder: Gruber, Robert, 84072, Abens / Gemeinde Au (DE)
(74) Vertreter: Grünecker, Kinkeldey, Stockmair & Schwanhäusser

(56) Entgegenhaltungen:
- EP-A1- 1 683 854
- DE-A1- 4 344 330
- DE-B- 1 059 861
- GB-A- 2 118 206

## Beschreibung

Die Erfindung betrifft einen Läuterbottich nach dem Oberbegriff des Anspruchs 1 sowie ein entsprechendes Verfahren.

DE 4344330 A1 beschreibt einen Läuterbottich, der mit einem (nicht dargestellten) externen Einmaischgefäß mittels Leitungen verbunden ist. Beim Fördern von Maische in einen Läuterbottich wird die zuführende Abmaischleitung zum Ende einer Charge üblicherweise mit Wasser in Richtung des Läuterbottichs ausgeschoben. Dieses Ausschubwasser verbleibt in der Abmaischleitung bis zum Transfer der nachfolgenden Charge und wird mit dieser gemeinsam durch die Maischeeinlässe in den Läuterbottich gefördert. Diese Verdünnung der Maische reduziert die Effizienz des Abläuterns (zum Beispiel der Extraktgewinnung) und ist insbesondere bei der Herstellung konzentrierter Würzen unerwünscht.

Zusätzlich ist zwischen dem Behälterboden des Läuterbottichs und dem Senkboden eine Wasservorlage einzubringen, um Luftblasen im Bereich des Senkbodens und des ausgangsseitigen Abläutersystems zu entfernen. Luft im Abläutersystem würde die Leistung des Läuterbottichs und die Qualität der produzierten Würze mindern.

Aus Gründen der Verfahrensökonomie und der Produktqualität wäre es wünschenswert, die bei den oben genannten Produktionsschritten als Verdünnung anzurechnenden Wassermengen zu reduzieren.

Ebenso besteht bei der Reinigung des Läuterbottichs und der zugeordneten Leitungen das Problem, dass die Behälterreinigung nicht alle Teile des Leitungssystems und dessen Anschlüsse an den Behältern erfasst oder oftmals nicht zufriedenstellend reinigt. Diese müssen dann in separaten Schritten, z.B. mit einem Laugensud oder einer Leitungsreinigung, unter großem Einsatz von Zeit, Energie und Reinigungsmedien gereinigt werden. Insbesondere das Ansetzen eines Laugensuds zum Durchspülen der Leitungen ist zeitraubend und unwirtschaftlich.

Es besteht somit zusätzlich Bedarf für eine bezüglich der Reinigung verbesserte Medienführung im Bereich des Leitungssystems des Läuterbottichs.

Die gestellte Aufgabe wird mit einem Läuterbottich gemäß Anspruch 1 erfüllt. Demnach ist eine Verbindungsleitung vorgesehen, durch die die zuführende Abmaischleitung, insbesondere via wenigstens einer zum Ausleiten der Würze vorgesehenen Abläuterleitung, mit einem Bereich zwischen dem Boden des Läuterbottichs und einem an dem Läuterbottich vorgesehen Senkboden verbunden werden kann. Dadurch kann ein zum Ausschieben von Maische oder zur Reinigung des Läuterbottichs vorgesehenes wässriges Medium aus der Abmaischleitung durch die Abläuterleitung in den Läuterbottich geleitet werden. Da die Abläuterleitung über Läuterrohre und Anstichöffnungen mit einem Bereich des Läuterbottichs unterhalb des Senkbodens verbunden ist, kann das wässrige Medium durch die Abläuterleitung als Wasservorlage unterhalb des Senkbodens des Läuterbottichs eingeleitet werden. Eine zusätzliche Wasservorlage zum Entlüften des ausgangsseitigen Bereichs des Läuterbottichs, der Anstichöffnungen und der Läuterrohre ist daher entbehrlich oder kann zumindest mengenmäßig reduziert werden. Es lässt sich somit eine unerwünschte Verdünnung der Maische und der Vorderwürze verhindern oder reduzieren. Die Abläuterleitung könnte auch mit anderen Öffnungen, die unterhalb des Senkbodens in den Läuterbottich münden, verbunden sein, beispielsweise über separate Verbindungsleitungen, die ergänzend zu den Läuterrohren vorgesehen sind. Es ist somit entscheidend, dass die Abläuterleitung mit einem Bereich unterhalb des Senkbodens verbunden werden kann.

Ebenso kann ein wässriges Medium zur Reinigung des ausgangsseitigen Bereichs des Läuterbottichs, der Anstichöffnungen und der Läuterrohre eingeleitet werden, so dass die Effizienz der Reinigung verbessert werden kann.

Eine günstige Ausführungsform des erfindungsgemäßen Läuterbottichs umfasst ferner eine Stelleinrichtung zum Einstellen des Durchflusses durch die Verbindungsleitung. Dadurch lässt sich die Verbindungsleitung gezielt verriegeln und öffnen oder der Durchfluss an einen Betriebszustand anpassen, beispielsweise an ein kontrolliertes Verdrängen der Luft aus dem ausgangsseitigen Abläutersystem oder eine für die Reinigung besonders vorteilhafte Einleitung von Reinigungsmittel.

Eine günstige Ausführungsform des erfindungsgemäßen Läuterbottichs umfasst ferner eine Stelleinrichtung zum Verschließen eines ersten Abschnitts der Abläuterleitung, um das wässrige Medium durch einen zweiten Abschnitt der Abläuterleitung entgegen der Produktstromrichtung in Richtung des Läuterbottichs zu leiten. Dadurch lässt sich das wässrige Medium besonders effektiv in den Läuterbottich einleiten.

Vorzugsweise umfasst der erfindungsgemäße Läuterbottich ferner eine Reinigungsleitung zum Zuführen eines zur Reinigung vorgesehenen wässrigen Mediums in den Läuterbottich, sowie eine weitere Verbindungsleitung, durch die die Reinigungsleitung mit der Abmaischleitung verbunden werden kann, um das wässrige Medium in die Abmaischleitung zu leiten. Dadurch kann die Reinigung der Abmaischleitung gemeinsam mit der Reinigung des Läuterbottichs erfolgen. Insbesondere können dabei auch die Maischeinlässe und die Anstichöffnungen in effizienter Weise gereinigt werden.

Vorzugsweise ist die Reinigungsleitung eine CIP-Vorlaufleitung. Dadurch lassen sich der Läuterbottich, die Abmaischleitung und das Abläutersystem besonders effizient reinigen.

Ein derartiger Läuterbottich kann besonders effiziente und qualitativ hochwertige Würzen produzieren, beispielsweise für das sogenannte "high gravity brewing", und lässt sich besonders wirtschaftlich reinigen.

Bei einer besonders günstigen Ausgestaltung ist in dem Läuterbottich eine kreisförmige Läuterfläche vorgesehen, und an der Unterseite oder an einer umfänglichen Seitenwand des Läuterbottichs sind Maischeeinlässe angeordnet. Dadurch lässt sich ein besonders schonender, sauerstoffarmer Maischeeintrag mit einer effektiven Verdrängung von Luft aus dem Bereich unter-halb des Senkbodens kombinieren.

Bei einer weiteren besonders günstigen Ausgestaltung ist in dem Läuterbottich eine ringförmige Läuterfläche vorgesehen, und an der Unterseite und/oder an einer zentralen Seitenwand des Läuterbottichs sind Maischeeinlässe angeordnet. Auch mit dieser Variante lässt sich ein besonders schonender, sauerstoffarmer Maischeeintrag mit einer effektiven Verdrängung von Luft aus dem Bereich unterhalb des Senkbodens kombinieren. Unter der zentralen Seitenwand ist eine Wand im Bereich des Innenkreises der ringförmigen Läuterfläche zu verstehen.

Die gestellte Aufgabe wird ferner mit einem Verfahren zur Medienführung durch einen Läuterbottich gelöst, das die folgenden Schritte umfasst: a) Einleiten eines zum Ausschieben von Maische oder zur Reinigung des Läuterbottichs vorgesehenen wässrigen Mediums in eine dem Läuterbottich zugeordnete Abmaischleitung; b) Verbinden der Abmaischleitung mit einem Bereich zwischen dem Boden (12a) des Läuterbottichs (12) und einem an dem Läuterbottich (12) vorgesehen Senkboden (29), insbesondere mittels wenigstens einer an dem Läuterbottich zum Ausleiten von Würze vorgesehen Abläuterleitung; und c) Einleiten des wässrigen Mediums in den Läuterbottich. Besonders vorteilhaft ist es, wenn das wässrige Medium von der Abläuterleitung durch Läuterrohre und Anstichöffnungen unterhalb des Senkbodens des Läuterbottichs eingeleitet wird. Es ist jedoch auch denkbar, das wässrige Medium durch andere unterhalb des Senkbodens in den Läuterbottich mündende Leitungen einzuleiten.

Bei einer vorteilhaften Ausgestaltung ist das wässrige Medium eine Reinigungsflüssigkeit, die als CIP-Vorlauf eingespeist wird. Dadurch können Läuterbottich und die zugeordneten Produkt führenden Leitungen besonders wirtschaftlich gereinigt werden.

Vorzugsweise wird das wässrige Medium aus der Abmaischleitung zusätzlich durch an dem Läuterbottich vorgesehene Maischeeinlässe geleitet. Dadurch lassen sich die Produkteinlässe und die Produktabläufe gemeinsam und somit besonders effizient reinigen.

Vorzugsweise ist das wässrige Medium ein Ausschubwasser zum Ausschieben von Maische, das als Wasservorlage dient, um einen Bereich unterhalb eines an dem Läuterbottich vorgesehenen Senkbodens zu entlüften. Dadurch wird eine zusätzliche, die produzierte Würze verdünnende Wasservorlage entbehrlich, oder diese kann mengenmäßig reduziert werden.

Vorzugsweise wird das wässrige Medium in den Läuterbottich gepumpt. Dadurch lässt sich eine Wasservorlage oder eine Reinigung besonders kontrolliert bereit stellen.

Vorzugsweise ist das wässrige Medium Ausschubwasser, das mit Hilfe von Maische aus der Abmaischleitung in Richtung des Läuterbottichs ausgeschoben wird. Dadurch lässt sich eine Wasservorlage auf besonders einfache Weise realisieren.

Bevorzugte Ausführungsformen der Erfindung sind in der Zeichnung dargestellt. Es zeigen:
- Figur 1: ein Schema eines Läuterbottichs mit seitlicher Maischeinlagerung und einer daran angepassten erfindungsgemäßen Vorrichtung zur Medienführung;
- Figur 2: eine Schema eines Läuterbottichs mit Maischeeinlagerung von unten und einer daran angepassten erfindungsgemäßen Vorrichtung zur Medienführung; und
- Figur 3: ein Schema eines Läuterbottichs mit seitlicher Maischeeinlagerung und/oder Maischeeinlagerung von unten, mit ringförmiger Läuterfläche und einer daran angepassten erfindungsgemäßen Vorrichtung zur Medienführung.

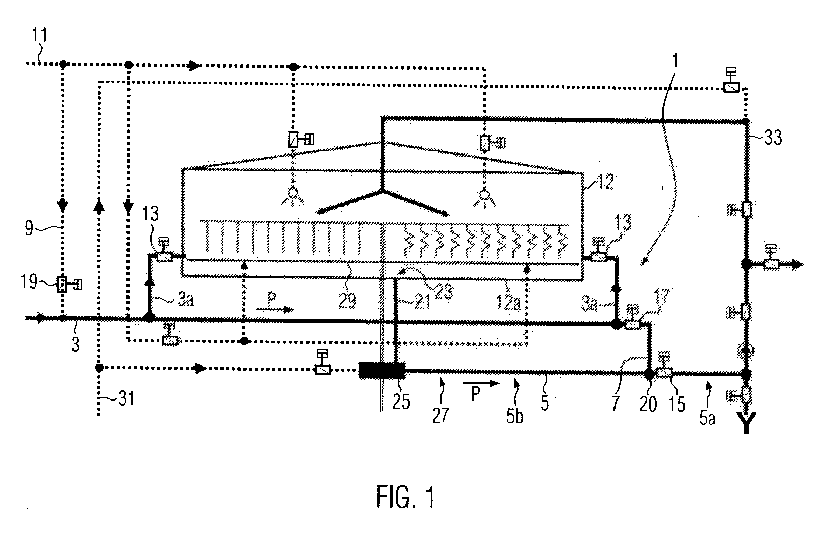

Wie Figur 1 erkennen lässt, umfasst die erfindungsgemäße Vorrichtung 1 eine Abmaischleitung 3 zum Bereitstellen von Maische, eine Abläuterleitung 5 zum Ausleiten von Würze, eine erste Verbindungsleitung 7 zum Verbinden der Abmaischleitung 3 mit der Abläuterleitung 5 und eine zweite Verbindungsleitung 9 zum Anschließen einer Reinigungsleitung 11 an die Abmaischleitung 3. Die vorstehend genannten Leitungen sind jeweils einem Läuterbottich 12 zugeordnet. Die Reinigungsleitung 11 ist vorzugsweise eine CIP-Vorlaufleitung für ein "Cleaning In Place". Während der Produktion wird über diese Vorlaufleitung Wasser, beispielsweise Frischwasser oder warmes Brauwasser, dem Abläutersystem zugeführt..

An der Abläuterleitung 5 und den Verbindungsleitungen 7 und 9 ist jeweils eine Stelleinrichtung 15, 17, 19 zum Öffnen und Verschließen der jeweiligen Leitung und/oder zum Einstellen eines Durchflusses durch die jeweilige Leitung vorgesehen, beispielsweise in Form geeignet ansteuerbarer Ventile.

Von der Abmaischleitung 3 zweigen Maischezuleitungen 3a ab, die jeweils mit einer Stelleinrichtung 13 zum Öffnen und Verschließen der jeweiligen Maischezuleitung 3a und/oder zum Einstellen eines Durchflusses durch die Maischezuleitung 3a versehen sind.

Weitere Stelleinrichtungen sind durch entsprechende Symbole in den Figuren 1 bis 3 angedeutet, auf Grund ihrer bekannten Funktion jedoch nicht näher beschrieben. Der Übersichtlichkeit halber sind Produktleitungen durchgezogen dargestellt, Reinigungsleitungen und Frischwasserleitungen gepunktet.

Die Stelleinrichtung 15 ist in einem ersten Abschnitt 5a der Abläuterleitung 5, in der Produktstromrichtung P abwärts von einer Verbindungsstelle 20 der Abläuterleitung 5 mit der ersten Verbindungsleitung 7 angeordnet. Entsprechend liegt ein zweiter Abschnitt 5b der Abläuterleitung 5 stromaufwärts von der Verbindungsstelle 20. Somit kann ein wässriges Medium, beispielsweise bestehend aus Ausschubwasser, durch die Abmaischleitung 3 in Produktstromrichtung P, durch die erste Verbindungsleitung 7 und entgegen der Produktstromrichtung P durch die Abläuterleitung 5, insbesondere durch den zweiten Abschnitt 5b, in den Läuterbottich 12 geleitet werden.

An der Abläuterleitung 5 ist der Einfachheit halber lediglich ein einzelnes Läuterrohr 21 und eine Anstichöffnung 23 mit einer Ringleitung oder einem Sammeltopf 25 zum Ausleiten der Würze in der Produktstromrichtung P aus dem Läuterbottich 12 dargestellt. Es versteht sich jedoch von selbst, dass in der Regel eine Vielzahl derartiger Läuterrohre 21 und Anstichöffnungen 23 vorgesehen sind. Diese können in bekannter Weise zu Ringleitungen, Sammeltöpfen 25 oder Sammelbehältern zusammengefasst werden. Ebenso können mehrere Abläuterleitungen 5 vorgesehen sein, die mit den Läuterrohren 21, den Anstichöffnungen 23 und den Ringleitungen oder Sammeltöpfen 25 ein gemeinsames Abläutersystem 27 bilden.

Entscheidend für die Funktionsweise der erfindungsgemäßen Vorrichtung 1 ist, dass die Abläuterleitung 5 entgegen der Produktstromrichtung P mit einem wässrigen Medium durchströmt werden kann, so dass diese, insbesondere durch die Anstichöffnungen 23, in einem Bereich unterhalb eines in dem Läuterbottich 12 vorgesehenen Senkbodens 29 eingeleitet werden kann. Es ist daher möglich, Luft und/oder Verunreinigungen aus einem Bereich zwischen dem Senkboden 29 und dem Behälterboden 12a des Läuterbottichs 12 zu entfernen.

Das wässrige Medium kann aus Frischwasser bestehen oder eine Mischung aus Wasser und Produktbestandteilen oder eine Mischung aus Wasser und Reinigungsflüssigkeit sein.

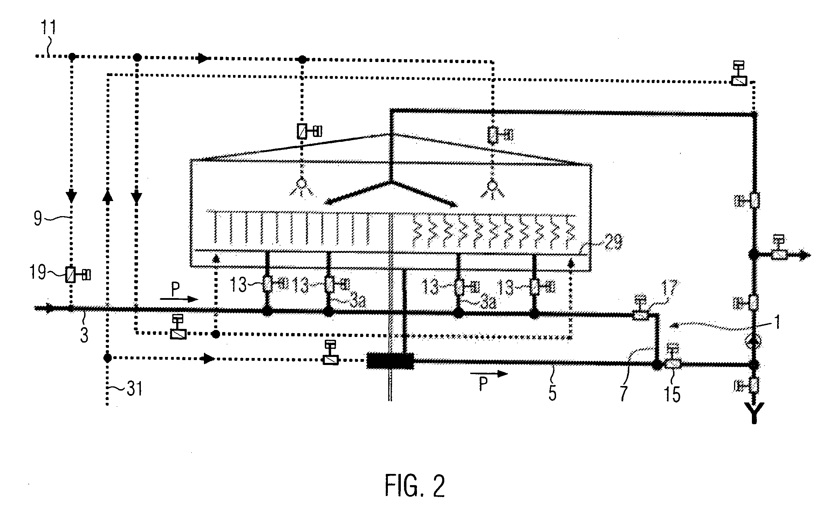

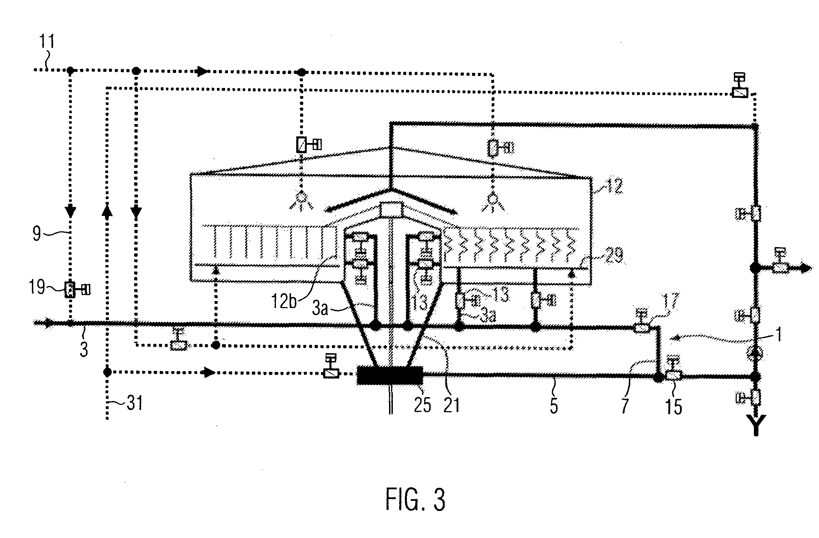

In den Figuren 2 und 3 sind in ihrer Funktionsweise zur vorstehend beschriebenen Vorrichtung 1 äquivalente Vorrichtungen zur Medienführung dargestellt. Diese sind jedoch an jeweils spezielle Typen des Läuterbottichs 12 angepasst. In Figur 2 erfolgt die Maischeeinlagerung nicht, wie in Figur 1 dargestellt, seitlich oberhalb des Senkbodens 29 sondern von unten durch im Senkboden 29 vorgesehene Maischeinlässe. Eine solche Anordnung ermöglicht eine besonders schonende Einlagerung der Maische, da der Kontakt der Maische mit Luft oder Sauerstoff minimiert wird.

Während die Läuterfläche in den Figuren 1 und 2 kreisförmig ist, im Wesentlichen entsprechend der Fläche des Senkbodens 29, ist die Läuterfläche in Figur 3 im Wesentlichen ringförmig. In diesem Fall kann der Maischeeintrag sowohl von unten als auch durch die bezogen auf die Ringkontur innere Seitenwand 12b des Läuterbottichs 12 erfolgen. Derartige Läuterbottiche 12 sind besonders effizient in Bezug auf Abläuterleistung und Extraktgewinnung.

Die Funktionsweise der erfindungsgemäßen Vorrichtung 1 wird beispielhaft unter Bezugnahme auf Figur 1 beschrieben. Sie lässt sich jedoch auf die in den Figuren 2 und 3 gezeigten Ausführungsformen uneingeschränkt übertragen. Es versteht sich daher von selbst, dass auch die Merkmale der beschriebenen und dargestellten Ausführungsformen beliebig in technisch sinnvoller Weise kombiniert werden können. In den Figuren 2 und 3 nicht bezeichnete Einrichtungen entsprechen in ihrer Funktion den in Figur 1 an gleicher Stelle dargestellten Einrichtungen. Außerdem sind obligatorische Einrichtungen, wie beispielsweise zur Treberförderung oder CIP-Medienrückführung, nicht dargestellt.

In einem ersten Betriebszustand der Produktion ist die Abmaischleitung 3 mit Wasser oder einem wässrigen Mischmedium gefüllt. Dieses Wasser oder diese wässrige Mischphase wurde vorzugsweise während der Produktion der vorangegangenen Charge eingeleitet, insbesondere beim Ausschieben der Maische in den Läuterbottich 12.

Die Stelleinrichtungen 13, 15 und 19 sind jeweils in einem geschlossenen Zustand. Die Stelleinrichtung 17 wird geöffnet. Das wässrige Medium in Form von Wasser oder der wässrigen Mischphase wird nun aus der Abmaischleitung 3 durch die erste Verbindungsleitung 7 in die Abläuterleitung 5 gefördert und in dieser entgegen der Produktstromrichtung P, durch die Ringleitung 25, die Läuterrohre 21 und die Anstichöffnungen 23 in den Läuterbottich 12 geleitet. Das wässrige Medium kann beispielsweise durch eine nicht dargestellte Pumpe gefördert und/oder durch in der Abmaischleitung 3 nachfolgende Maische ausgeschoben werden. Das in den Läuterbottich 12 eingeleitete wässrige Medium dient als Vorlage für das nachfolgende Abläutern und verdrängt Luft unterhalb des Senkbodens 29. Bei Bedarf kann zusätzlich Frischwasser aus dem zugehörigen Leitungssystem 31 in bekannter Weise als Vorlage ergänzt werden.

Im Unterschied zu bekannten Verfahren kann ein wässriges Medium somit aus der Abmaischleitung 3 unterhalb des Senkbodens 29 in den Läuterbottich 12 eingeleitet werden und als Vorlage für das Abläutern verwendet werden. Somit kann die Verdünnung der Maische auf ein durch die Vorlage bedingtes Mindestmaß reduziert werden.

In einem zweiten Betriebszustand zur Reinigung des Läuterbottichs 12 und der zugeordneten Produktleitungen wird die Stelleinrichtung 19 geöffnet, um eine Reinigungsflüssigkeit, insbesondere aus einem CIP-Vorlauf, in die Abmaischleitung 3 einzuleiten. Die Stelleinrichtungen 13, 15 und 17 können nun gemeinsam oder nacheinander geöffnet werden, um die Reinigungsflüssigkeit durch die jeweils durchgängigen Produktleitungen 3 bis 7 zu leiten. Somit können der Läuterbottich 12 und die zugeordneten Produktleitungen in ein CIP-Verfahren integriert werden, wobei es insbesondere auch möglich ist, die Eingänge der Leitungen 3a in den Läuterbottich und die Bereiche der Anstichöffnungen 23 und der anschließenden Leitungen 21, 5 in den Reinigungskreislauf einzubeziehen.

## Patentansprüche

1. Läuterbottich (12), mit:
einer Abmaischleitung (3) zum Zuführen von Maische in den Läuterbottich (12); und
wenigstens einer Abläuterleitung (5, 21) zum Ausleiten von Würze aus dem Läuterbottich (12);
**gekennzeichnet durch**
eine Verbindungsleitung (7), **durch** die die Abmaischleitung (3), insbesondere via die Abläuterleitung (5, 21), mit einem Bereich zwischen dem Boden (12a) des Läuterbottichs und einem an dem Läuterbottich (12) vorgesehen Senkboden (29) verbunden werden kann, um ein zum Ausschieben von Maische oder zur Reinigung des Läuterbottichs (12) vorgesehenes wässriges Medium aus der Abmaischleitung (3) in den Läuterbottich (12) zu leiten.

2. Läuterbottich nach Anspruch 1, ferner mit einer Stelleinrichtung (17) zum Einstellen des Durchflusses durch die Verbindungsleitung (7).

3. Läuterbottich nach Anspruch 1 oder 2, ferner mit einer Stelleinrichtung (15) zum Absperren eines ersten Abschnitts (5a) der Abläuterleitung (5, 21), um das wässrige Medium durch einen zweiten Abschnitt (5b) der Abläuterleitung (5, 21) entgegen der Produktstromrichtung (P) in Richtung des Läuterbottichs (12) zu leiten.

4. Läuterbottich nach wenigstens einem der vorigen Ansprüche, ferner mit einer Reinigungsleitung (11) zum Zuführen eines zur Reinigung vorgesehenen wässrigen Mediums in den Läuterbottich (12), sowie mit einer weiteren Verbindungsleitung (9), durch die die Reinigungsleitung (11) mit der Abmaischleitung (3) verbunden werden kann, um das wässrige Medium in die Abmaischleitung (3) zu leiten.

5. Läuterbottich nach Anspruch 4, wobei die Reinigungsleitung (11) eine CIP-Vorlaufleitung ist.

6. Läuterbottich nach Anspruch 5, ferner mit einer kreisförmigen Läuterfläche und an der Unterseite oder an einer umfänglichen Seitenwand des Läuterbottichs (12) angeordneten Maischeeinlässen.

7. Läuterbottich nach Anspruch 5, ferner mit einer ringförmigen Läuterfläche und an der Unterseite und/oder an einer zentralen Seitenwand (12b) des Läuterbottichs (12) angeordneten Maischeeinlässen.

8. Verfahren zur Medienführung durch einen Läuterbottich (12), mit folgenden Schritten:
a) Einleiten eines zum Ausschieben vom Maische oder zur Reinigung des Läuterbottichs vorgesehenen wässrigen Mediums in eine dem Läuterbottich (12) zugeordnete Abmaischleitung (3);
b) Verbinden der Abmaischleitung (3) mit einem Bereich zwischen dem Boden (12a) des Läuterbottichs (12) und einem an dem Läuterbottich (12) vorgesehen Senkboden (29), insbesondere mittels wenigstens einer an dem Läuterbottich (12) zum Ausleiten von Würze vorgesehen Abläuterleitung (5, 21);
c) Einleiten des wässrigen Mediums in den Läuterbottich (12).

9. Verfahren nach Anspruch 8, wobei das wässrige Medium eine Reinigungsflüssigkeit ist, die als CIP-Vorlauf eingespeist wird.

10. Verfahren nach Anspruch 8 oder 9, wobei das wässrige Medium aus der Abmaischleitung (3) zusätzlich durch an dem Läuterbottich (12) vorgesehene Maischeeinlässe geleitet wird.

11. Verfahren nach Anspruch 10, wobei das wässrige Medium Ausschubwasser zum Ausschieben von Maische ist, das als Wasservorlage bereit gestellt wird, um einen Bereich unterhalb eines an dem Läuterbottich (12) vorgesehenen Senkbodens (29) zu entlüften.

12. Verfahren nach wenigstens einem der Ansprüche 8 bis 11, bei dem das wässrige Medium in den Läuterbottich (12) gepumpt wird.

13. Verfahren nach Anspruch 11, bei dem das wässrige Medium Wasser ist, das mit Hilfe von Maische aus der Abmaischleitung (3) in Richtung des Läuterbottichs (12) ausgeschoben wird.

## Claims

1. Lauter tun (12), having:
a finish mashing pipe (3) for feeding mash into the lauter tun (12); and at least one run-off pipe (5, 21) for conducting wort out of the lauter tun (12); **characterised by** a connecting pipe (7), through which the finish mashing pipe (3), in particular via the run-off pipe (5, 21), can be connected to an area between the bottom (12a) of the lauter tun and a false bottom (29) provided on the lauter tun (12), so that an aqueous medium, which is provided for discharging mash or for cleaning the lauter tun (12), can be conducted out of the finish mashing pipe (3) into the lauter tun (12).

2. Lauter tun according to Claim 1, further having a regulating device (17) for regulating the flow through the connecting pipe (7).

3. Lauter tun according to Claim 1 or 2, further having a regulating device (15) for closing off a first section (5a) of the run-off pipe (5, 21), so that the aqueous medium can be conducted through a second section (5b) of the run-off pipe (5, 21) against the product flow direction (P) in the direction of the lauter tun (12).

4. Lauter tun according to at least one of the preceding claims, further having a cleaning pipe (11) for feeding an aqueous medium provided for cleaning into the lauter tun (12) and having a further connecting pipe (9), through which the cleaning pipe (11) can be connected to the finish mashing pipe (3), so that the aqueous medium can be conducted into the finish mashing pipe (3).

5. Lauter tun according to Claim 4, wherein the cleaning pipe (11) is a CIP flow pipe.

6. Lauter tun according to Claim 5, further having a circular lauter area and mash intakes arranged on the underside or on a circumferential side wall of the lauter tun (12).

7. Lauter tun according to Claim 5, further having an annular lauter area and mash intakes arranged on the underside and/or on a central side wall (12b) of the lauter tun (12).

8. Method for conveying media through a lauter tun (12), having the following steps:
a) introducing an aqueous medium, which is provided for discharging mash or for cleaning the lauter tun, into a finish mashing pipe (3) assigned to the lauter tun (12);
b) connecting the finish mashing pipe (3) to an area between the bottom (12a) of the lauter tun (12) and a false bottom (29) provided on the lauter tun (12), in particular by means of at least one run-off pipe (5, 21) provided on the lauter tun (12) for conducting wort out of said lauter tun (12);
c) introducing the aqueous medium into the lauter tun (12).

9. Method according to Claim 8, wherein the aqueous medium is a cleaning fluid which is fed in as a CIP flow.

10. Method according to Claim 8 or 9, wherein the aqueous medium is additionally conducted out of the finish mashing pipe (3) through mash intakes provided on the lauter tun (12).

11. Method according to Claim 10, wherein the aqueous medium is discharge water for discharging mash and is provided as a water seal, so that an area below a false bottom (29) provided on the lauter tun (12) can be deaerated.

12. Method according to at least one of Claims 8 to 11, in which the aqueous medium is pumped into the lauter tun (12).

13. Method according to Claim 11, in which the aqueous medium is water which with the aid of mash is discharged out of the finish mashing pipe (3) in the direction of the lauter tun (12).

## Revendications

1. Cuve de clarification ou cuve filtre (12) comprenant :
une conduite d'écoulement de maische (3) pour l'amenée de maische dans la cuve de clarification (12) ; et
au moins une conduite de sortie de clarification (5, 21) pour l'évacuation de moût de la cuve de clarification (12) ;
**caractérisée par**
une conduite de liaison (7) par l'intermédiaire de laquelle la conduite d'écoulement de maische (3) peut être reliée, notamment via la conduite de sortie de clarification (5, 21), à une zone entre le fond (12a) de la cuve de clarification et un faux fond de précipitation (29) prévu dans la cuve de clarification (12), en vue de diriger un fluide aqueux, qui est prévu pour éjecter de la maische ou pour nettoyer la cuve de clarification (12), de la conduite d'écoulement de maische (3) dans la cuve de clarification (12).

2. Cuve de clarification selon la revendication 1, comprenant par ailleurs un dispositif de réglage (17) pour régler le débit d'écoulement à travers la conduite de liaison (7).

3. Cuve de clarification selon la revendication 1 ou la revendication 2, comprenant par ailleurs un dispositif de réglage (15) pour fermer un premier tronçon (5a) de la conduite de sortie de clarification (5, 21), en vue de diriger le fluide aqueux à travers un deuxième tronçon (5b) de la conduite de sortie de clarification (5, 21), à l'encontre du sens d'écoulement de production (P), en direction de la cuve de clarification (12).

4. Cuve de clarification selon l'une au moins des revendications précédentes, comprenant par ailleurs une conduite de nettoyage (11) pour l'amenée d'un fluide aqueux, prévu pour le nettoyage, dans la cuve de clarification (12), ainsi qu'une autre conduite de liaison (9) par laquelle la conduite de nettoyage (11) peut être reliée à la conduite d'écoulement de maische (3), en vue de diriger le fluide aqueux dans la conduite d'écoulement de maische (3).

5. Cuve de clarification selon la revendication 4, dans laquelle la conduite de nettoyage (11) est une conduite d'alimentation primaire CIP (cleaning in place), à savoir de nettoyage en place.

6. Cuve de clarification selon la revendication 5, présentant par ailleurs une surface de clarification de forme circulaire, et des entrées de maische agencées sur le côté inférieur ou sur une paroi latérale périphérique de la cuve de clarification (12).

7. Cuve de clarification selon la revendication 5, présentant par ailleurs une surface de clarification de forme annulaire, et des entrées de maische agencées sur le côté inférieur et/ou sur une paroi latérale centrale (12b) de la cuve de clarification (12).

8. Procédé pour guider un fluide à travers une cuve de clarification (12), comprenant les étapes suivantes :
a) envoyer un fluide aqueux, qui est prévu pour éjecter de la maische ou pour nettoyer la cuve de clarification, dans une conduite d'écoulement de maische (3) affectée à la cuve de clarification (12) ;
b) relier la conduite d'écoulement de maische (3) à une zone entre le fond (12a) de la cuve de clarification (12) et un faux fond de précipitation (29) prévu dans la cuve de clarification (12), notamment au moyen d'au moins une conduite de sortie de clarification (5, 21) prévue sur la cuve de clarification (12) pour l'évacuation de moût ;
c) envoyer le fluide aqueux dans la cuve de clarification (12).

9. Procédé selon la revendication 8, selon lequel le fluide aqueux est un liquide de nettoyage, qui est introduit en tant que fluide primaire CIP, à savoir de nettoyage en place.

10. procédé selon la revendication 8 ou la revendication 9, selon lequel le fluide aqueux est en outre envoyé de la conduite d'écoulement de maische (3), à travers des entrées de maische prévues sur la cuve de clarification (12).

11. Procédé selon la revendication 10, selon lequel le fluide aqueux est de l'eau d'éjection destinée à éjecter de la maische, et qui est mise à disposition en tant qu'eau primaire, en vue d'effectuer une purge d'air d'une zone en-dessous d'un faux fond de précipitation (29) prévu dans la cuve de clarification (12).

12. Procédé selon l'une au moins des revendications 8 à 11, selon lequel le fluide aqueux est pompé dans la cuve de clarification (12).

13. Procédé selon la revendication 11, selon lequel le fluide aqueux est de l'eau, qui est éjectée, à l'aide de maische, de la conduite d'écoulement de maische (3) en direction de la cuve de clarification (12).
